# EUROPEAN PATENT APPLICATION

(11) **EP 4 607 751 A1**
(43) Date of publication of application: **27.08.2025**
(21) Application number: 23879540.5
(22) Date of filing: 22.09.2023
(51) Int. Cl.: H02J 7/02, B25F 5/00, H02J 7/00

(54) **POWER FEEDING SYSTEM, ELECTRIC TOOL SYSTEM, AND POWER FEEDING DEVICE**

(30) Priority: 17.10.2022 JP 2022166372
(71) Applicant: Panasonic Corporation, Osaka 571-8501 (JP)
(72) Inventor: YUASA, Hidekazu, Kadoma-shi, Osaka 571-0057 (JP); HAYASHI, Naoto, Kadoma-shi, Osaka 571-0057 (JP); MURAKAMI, Hiroaki, Kadoma-shi, Osaka 571-0057 (JP); KITAMURA, Kota, Kadoma-shi, Osaka 571-0057 (JP); TSUJIMOTO, Naoki, Kadoma-shi, Osaka 571-0057 (JP); OKADA, Masaaki, Kadoma-shi, Osaka 571-0057 (JP)
(74) Representative: Müller-Boré & Partner Patentanwälte PartG mbB
(86) International application number: PCT/JP2023/034441
(87) International publication number: WO 2024/084892

(57) **Abstract**

An object of the present disclosure is to provide a power feeding system capable of improving the working efficiency. A power feeding system (10) for feeding power to an electric tool (21) which is hand-holdable. The power feeding system (10) includes a first storage battery (111), a feed circuit (112), a second storage battery (211), and a tool holder (12). The feed circuit (112) is configured to convert alternating-current power from a commercial power supply (300) into direct-current power and feed the direct-current power to the first storage battery (111). The second storage battery (211) is internal to the electric tool (21) or is internal to a battery pack (22) attachable to the electric tool (21). The tool holder (12) is capable of holding a battery-equipped electric tool (2) and is configured to, while holding the battery-equipped electric tool (2), feed electric power of the first storage battery (111) to the second storage battery (211). The battery-equipped electric tool (2) is the electric tool (21) to which the second storage battery (211) is internal or the electric tool (21) with the battery pack (22) attached, the second storage battery (211) being internal to the battery pack (22).

## Description

### Technical Field

The present disclosure relates to power feeding systems, electric tool systems, and power feeding devices and more specifically relates to a power feeding system, an electric tool system, and a power feeding device which feed electric power to a hand-holdable electric tool.

### Background Art

Patent Literature 1 describes a power supply adapter for electric tools. The power supply adapter for electric tools includes a power relay main body having a similar shape to a conventionally used rechargeable battery. The power relay main body feeds electric power from a portable large-capacitance storage battery to an electric tool.

In the power supply adapter for electric tools described in Patent Literature 1, the large-capacitance storage battery is connected to the electric tool at all times (while work is being carried out with the electric tool held by a hand of a user and also while the large-capacitance storage battery is being charged), and therefore, working efficiency may decrease.

### Citation List

### Patent Literature

Patent Literature 1: JP 2001-145276 A

### Summary of Invention

It is an object of the present disclosure to provide a power feeding system, an electric tool system, and a power feeding device which enable the working efficiency to be improved.

A power feeding system according to an aspect of the present disclosure feeds electric power to an electric tool which is hand-holdable. The power feeding system includes a first storage battery, a feed circuit, a second storage battery, and a tool holder. The feed circuit is configured to convert alternating-current power from a commercial power supply into direct-current power and feed the direct-current power to the first storage battery. The second storage battery is internal to the electric tool or is internal to a battery pack attachable to the electric tool. The tool holder is capable of holding a battery-equipped electric tool and is configured to, while holding the battery-equipped electric tool, feed electric power of the first storage battery to the second storage battery. The battery-equipped electric tool is the electric tool to which the second storage battery is internal or the electric tool with the battery pack attached, the second storage battery being internal to the battery pack.

An electric tool system according to an aspect of the present disclosure includes the power feeding system and a battery-equipped electric tool. The battery-equipped electric tool is the electric tool to which the second storage battery is internal or the electric tool with the battery pack attached, the second storage battery being internal to the battery pack.

A power feeding device according to an aspect of the present disclosure feeds electric power to an electric tool which is hand-holdable. The power feeding device includes a first storage battery, a feed circuit, and a tool holder. The feed circuit is configured to convert alternating-current power from a commercial power supply into direct-current power and feed the direct-current power to the first storage battery. The tool holder is capable of holding a battery-equipped electric tool and is configured to, while holding the battery-equipped electric tool, feed electric power of the first storage battery to the second storage battery. The battery-equipped electric tool is the electric tool to which the second storage battery is internal or the electric tool with a battery pack attached, the second storage battery being internal to the battery pack.

### Brief Description of Drawings

FIG. 1 is a block diagram of an electric tool system including a power feeding system according to an embodiment of the present disclosure;
FIG. 2 is an outline view of a power feeding device included in the power feeding system;
FIG. 3A is a view for illustrating a power feeding procedure to a first storage battery included in the power feeding system, and FIG. 3B is a view for illustrating a power feeding procedure to a second storage battery included in the power feeding system;
FIG. 4 is a flowchart illustrating a first announcement process by a tool holder included in the power feeding system;
FIG. 5 is a flowchart illustrating a second announcement process by a battery-equipped electric tool included in the power feeding system;
FIG. 6 is a block diagram of a variation of the power feeding system;
FIG. 7A is an outline view of a power feeding device included in the variation, and FIG. 7B is a view for illustrating a power feeding procedure to a second storage battery included in the variation;
FIG. 8 is a flowchart illustrating an announcement process by a tool holder included in the variation;
FIG. 9 is a flowchart illustrating a second lamp lighting control process included in the announcement process; and
FIG. 10 is a flowchart illustrating an instruction process by a battery-equipped electric tool included in the variation.

### Description of Embodiments

### (1) Main Part

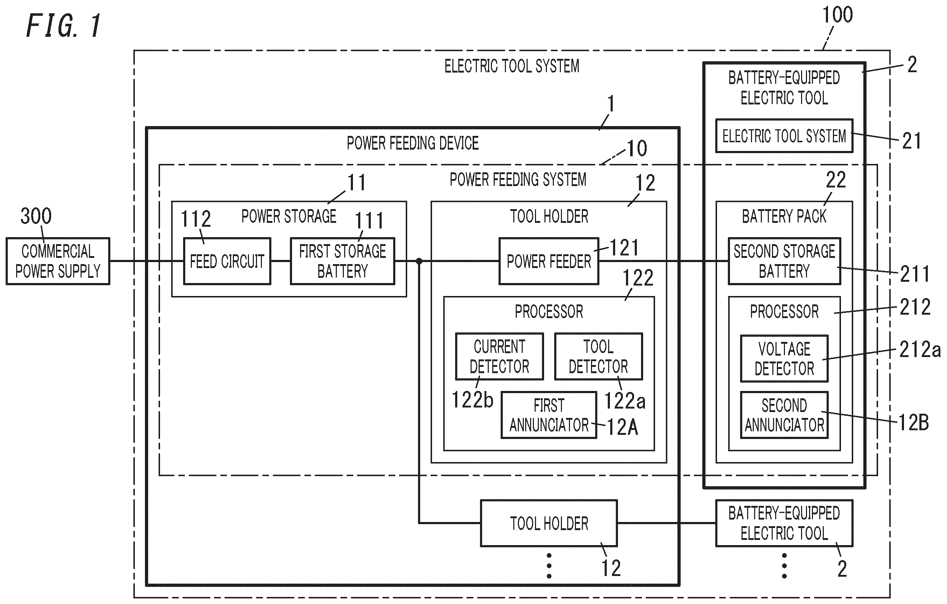

First of all, principal parts (matters common in an embodiment and a variation) of the present disclosure will be described with reference to mainly FIGS. 1 and 2 and FIGS. 6 and 7A.

### (1-1) Power Feeding System

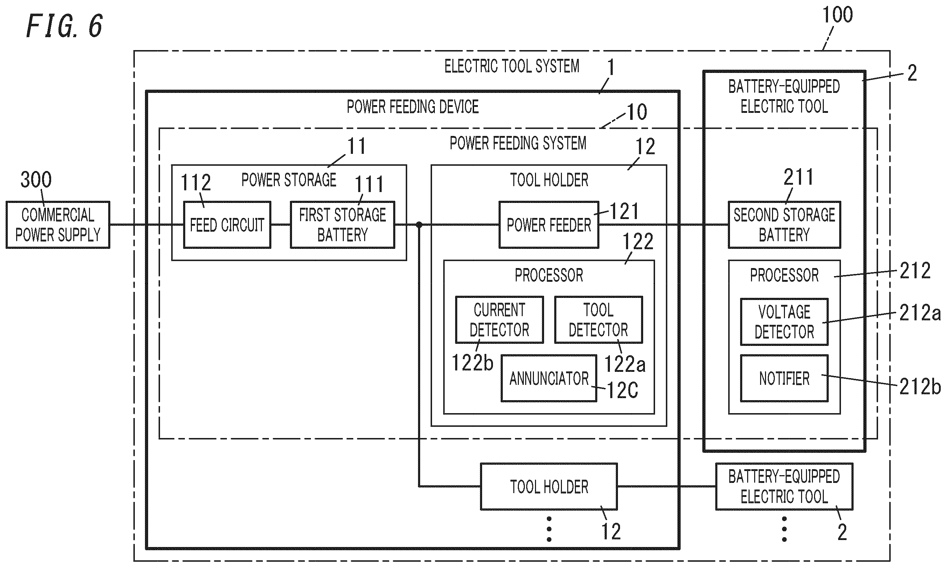

A power feeding system 10 according to the embodiment (see FIGS. 1 to 5) or variation (see FIGS. 6 to 10) of the present disclosure (hereinafter referred to as "a power feeding system 10 of the present disclosure") is a power feeding system for electric tools which feeds electric power to an electric tool 21. The electric tool 21 as mentioned in the present disclosure is a hand-holdable tool and is operated by direct-current power obtained by conversion of alternating-current power. Specifically, the electric tool 21 is, for example, a rotating tool, such as an electrically driven screw driver, but may be, for example, a cutting tool or any other type of electric tool.

As shown in FIG. 1 or FIG. 6, the power feeding system 10 includes a first storage battery 111, a feed circuit 112, a second storage battery 211, and a tool holder 12.

### (1-1-1) First Storage Battery

The first storage battery 111 accumulates direct-current power (hereinafter simply referred to as "electric power") obtained by conversion of alternating-current power by the feed circuit 112.

### (1-1-2) Feed Circuit

The feed circuit 112 converts alternating-current power from a commercial power supply 300 into direct-current power and feeds the direct-current power (feeds electric power) to the first storage battery 111.

### (1-1-3) Second Storage Battery

The second storage battery 211 accumulates the electric power fed from the first storage battery 111 via the tool holder 12. In the present embodiment, the second storage battery 211 is internal to a battery pack 22 attachable to the electric tool 21. Alternatively, the second storage battery 211 may be internal to the electric tool 21 as described in, for example, the variation.

### (1-1-4) Tool Holder

The tool holder 12 is capable of holding a battery-equipped electric tool 2 and is a tool holder having a power feeding function of feeding electric power of the first storage battery 111 to the second storage battery 211 while holding the battery-equipped electric tool 2.

### (1-1-5) Battery-Equipped Electric Tool

In the present embodiment, the battery-equipped electric tool 2 is the electric tool 21 with the battery pack 22 attached as shown in FIG. 1, the second storage battery 211 being internal to the battery pack 22. Alternatively, the battery-equipped electric tool 2 may be the electric tool 21 to which the second storage battery 211 is internal as described in the variation shown in FIG. 6.

As described above, in the power feeding system 10 of the present disclosure, the feed circuit 112 charges the first storage battery 111 in advance, and the tool holder 12 feeds the electric power of the first storage battery 111 to the second storage battery 211 while holding the battery-equipped electric tool 2 which includes the second storage battery 211 or which has the battery pack 22 attached, the battery pack 22 including the second storage battery 211.

In this way, while the battery-equipped electric tool 2 is held, the electric power of the first storage battery 111 is fed to the second storage battery 211 (the second storage battery 211 is charged with the electric power of the first storage battery 111), and thus, battery replacement for the battery-equipped electric tool 2 or attaching and detaching the battery pack 22 for battery charging is no longer required, thereby improving the working efficiency.

### (1-2) Plurality of Tool Holders

As shown in FIG. 1 or FIG. 6, the power feeding system 10 of the present disclosure includes a plurality of tool holders 12. This enables a plurality of battery-equipped electric tools 2 to be charged simultaneously, thereby improving the working efficiency.

### (1-3) Power Storage

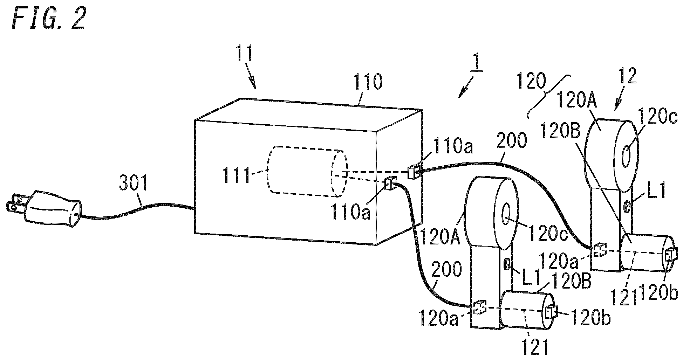

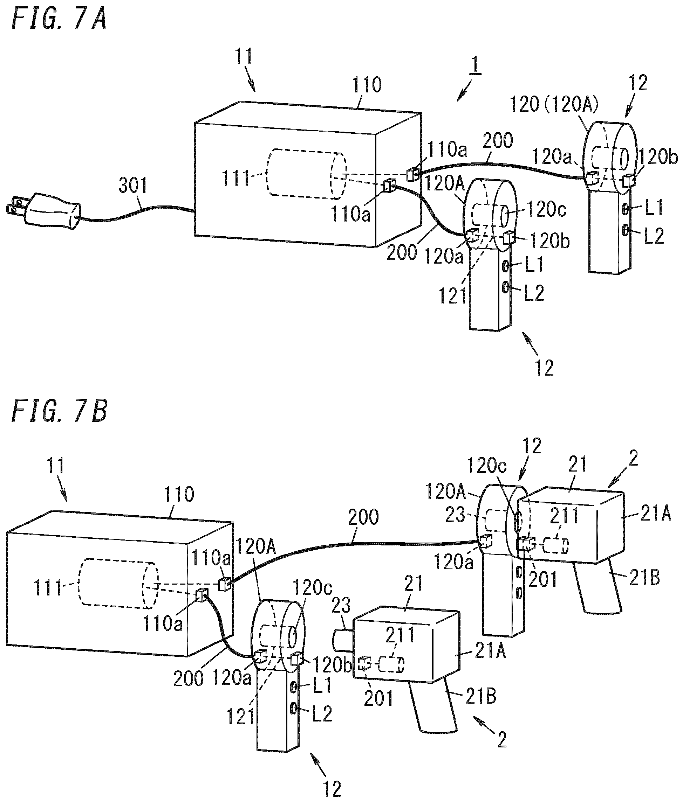

As shown in FIG. 1 or FIG. 6, the power feeding system 10 of the present disclosure includes a power storage 11. The power storage 11 includes the first storage battery 111 and the feed circuit 112 and includes a first housing 110 as shown in FIG. 2 or FIG. 7A.

### (1-4) First Housing and Second Housing

The first housing 110 houses the first storage battery 111 and the feed circuit 112. Note that in, for example, FIGS. 2 and 7A, the feed circuit 112 is omitted.

Each tool holder 12 includes a second housing 120 as shown in FIG. 2 or FIG. 7A. The second housing 120 houses a power feeder 121 and a processor 122 (both of which are described later) and is capable of holding the battery-equipped electric tool 2. At least one of the first housing 110 (the power storage 11) or the plurality of second housings 120 (the plurality of tool holders 12) is portable. For example, all of the power storage 11 and the plurality of tool holders 12 may be portable (transportable), or only the plurality of tool holders 12 may be transportable and the power storage 11 may be difficultly portable (may be fixed).

As described above, in the power feeding system 10 of the present disclosure, the power storage 11 and the tool holders 12 are configured as separate components, and at least either the power storage 11 or the tool holders 12 are portable, thereby improving the working efficiency in various types of environments (e.g., various types of production lines for producing various types of products in a flow operation).

### (1-5) Power Feeding Terminal, Input Terminal, Output Terminal, and Power Receiving Terminal

As shown in FIG. 2 or FIG. 7A, a power feeding device 1 (see FIG. 1: described later) included in the power feeding system 10 further includes power feeding terminals 110a, input terminals 120a, output terminals 120b, and power receiving terminals 201.

Each power feeding terminal 110a is provided for the first housing 110 included in the power storage 11 and is electrically connected to the first storage battery 111 housed in the first housing 110.

Each input terminal 120a is provided for the second housing 120 included in a corresponding one of the tool holders 12 and is electrically connectable to a corresponding one of the power feeding terminals 110a via a connection cable 200.

Each output terminal 120b is provided for the second housing 120 and is electrically connected to a corresponding one of the input terminals 120a.

Each power receiving terminal 201 is provided for a corresponding one of the electric tools 21 or a corresponding one of the battery packs 22 and is electrically connected to the corresponding one of the electric tools 21 or the second storage battery 211 which is internal to the corresponding one of the battery packs 22.

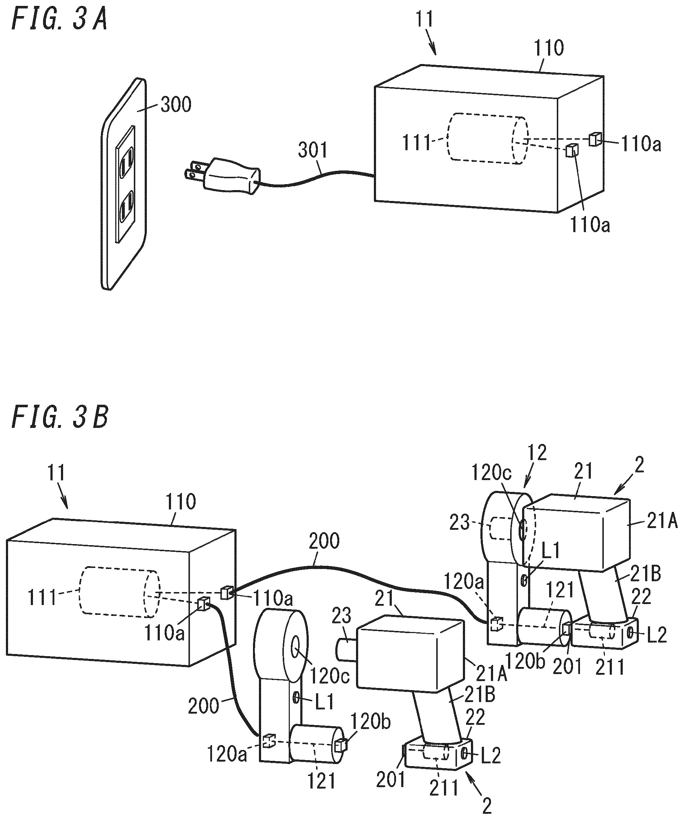

The output terminals 120b and the power receiving terminals 201 are electrically connectable by a physical coupling. The physical coupling means that each output terminals 120b come into contact with the a corresponding one of the power receiving terminals 201. The physical coupling means that, for example, when each output terminal 120b is a projections provided for the second housing 120 and each power receiving terminal 201 is a projection provided for the battery pack 22 as shown in FIG. 3B, tip ends of the two projections come into contact with each other. Alternatively, for example, when each output terminal 120b is a projection provided for the second housing 120 and Each power receiving terminal 201 is a recess formed in the battery pack 22, the physical coupling may mean that the projection is inserted into the recess.

As described above, the power storage 11 is connected to each tool holder 12 via the connection cable 200, thereby increasing the degree of freedom in the location of each tool holder 12 with respect to the power storage 11. Moreover, the connection between each tool holders 12 and the battery-equipped electric tool 2 is the physical coupling, and in a period during which the physical coupling is released, the battery-equipped electric tool 2 is operated by electric power of the second storage battery 211, thereby allowing the battery-equipped electric tool 2 to be moved to an arbitrary location. As a result, the working efficiency can be further improved.

### (1-6) Power Feeder

As shown in FIGS. 1 and 2 or FIGS. 6 and 7A, each tool holder 12 includes a power feeder 121.

The power feeder 121 performs power feeding in a state where the output terminal 120b and the power receiving terminal 201 are physically coupled to each other. As used herein, the "power feeding" means feeding the electric power of the first storage battery 111 to the second storage battery 211.

### (1-7) Battery-Equipped Electric Tool's Operation based on Electric Power of Second Storage Battery

The battery-equipped electric tool 2 held by a hand of a worker in a state where the output terminal 120b and the power receiving terminal 201 are physically decoupled from each other operates based on the electric power of the second storage battery 211. When the electric tool 21 is a rotating tool, the operation is, for example, rotary drive of a tip tool 23 attached to a tool body 21A.

As described above, in the case of the power feeding system 10 of the present disclosure, simply setting the battery-equipped electric tool 2 on the tool holder 12 between sessions of work by a worker allows the second storage battery 211 to be charged with the electric power from the first storage battery 111, and thus, a series of the sessions of work can be carried out without battery replacement or attaching and detaching the battery pack 22, thereby improving the working efficiency.

### (1-8) Annunciator

As shown in FIG. 2 or FIG. 7A, each tool holder 12 further includes an annunciator(s) (a first annunciator 12A and a second annunciator 12B of the embodiment, an annunciator 12C of the variation: hereinafter referred to as "an annunciator (12A, 12B, 12C)").

The annunciator (12A, 12B, 12C) issues an announcement about at least one of: whether or not the power feeding by the power feeder 121 is possible; or a charge state (e.g., charging, charge completion) of the second storage battery 211 based on the power feeding.

The announcement is, for example, lighting a first lamp L1 (an announcement showing that the power feeding is possible) in response to a change of the state of the first storage battery 111 from a state where the power feeding is impossible (a tool unconnected state or a non-energized state) to a state where the power feeding is possible (a tool connected state and an energized state). Alternatively, the announcement may be, for example, a change in lighting pattern of a second lamp (e.g., blinking that shows charging, continuous lighting that shows charge completion) based on the voltage, or a change in the voltage, of the second storage battery 211.

In this way, presenting to a worker at least one of: whether or not the power feeding from the first storage battery 111 to the second storage battery 211 is possible; or the charge state of the second storage battery 211 based on the power feeding facilitates recognition of appropriate timings to start and end charging the battery-equipped electric tool 2, thereby improving the working efficiency.

### (1-9) Features of First Storage Battery

The first storage battery 111 has larger capacitance than the second storage battery 211.

As described above, the first storage battery 111 has the large capacitance, and therefore, charging the first storage battery 111 once makes possible at least one of simultaneous charging of a plurality of second storage batteries 211 from the first storage battery 111 or repetitive charging of one second storage battery 211 from the first storage battery 111, thereby further improving the working efficiency.

### (1-10) Features of Second Storage Battery

The second storage battery 211 has a higher charging speed than the first storage battery 111. Note that in the present embodiment, the second storage battery 211 is a storage battery different in type from the first storage battery 111 and is chargeable faster than the first storage battery 111. Thus, the second storage battery 211 is chargeable in shorter time than the first storage battery 11.

As described above, the second storage battery 211 is fast-chargeable, and therefore, it is possible to proceed with a series of sessions of work while the second storage battery 211 is charged between the sessions of work, thereby further improving the working efficiency.

Note that the second storage battery 211 preferably has longer service life than the first storage battery 111.

The long service life of the second storage battery 211 reduces the frequency of changing the second storage battery 211. As a result, it is possible to provide the electric tool 21 to which the second storage battery 211 is internal (and thus, no battery pack 22 is required) as described in the variation shown in FIG. 6.

Moreover, the second storage battery 211 preferably has a higher energy density than the first storage battery 111.

The high energy density of the second storage battery 211 enables at least one of the volume or weight of the second storage battery 211 to be reduced, which reduces at least one of the size or weight of the battery-equipped electric tool 2, thereby further improving the working efficiency.

### (1-10-1) All-Solid-State Battery

The second storage battery 211 of the present disclosure is an all-solid-state battery. The second storage battery 211 may be, for example, a battery including a plurality of thin plate-like all-solid-state batteries stacked one on top of another.

Since the second storage battery 211 is the fast-chargeable all-solid-state battery, the working efficiency can be further improved. Moreover, the long service life of the all-solid-state battery enables the electric tool 21 to be provided to which a second storage battery 211 being the all-solid-state battery is internal. Further, the high energy density of the all-solid-state battery enables at least one of the size or weight of the battery-equipped electric tool 2 to be reduced, thereby further improving the working efficiency.

### (1-11) Electric Tool System

As shown in FIG. 1 or FIG. 6, an electric tool system 100 according to the embodiment or variation of the present disclosure (hereinafter referred to as "an electric tool system 100 of the present disclosure") includes the power feeding system 10 and the battery-equipped electric tools 2 as described above.

Each battery-equipped electric tool 2 is the electric tool 21 to which the second storage battery 211 is internal, or the electric tool 21 with the battery pack 22 attached, the second storage battery 211 being internal to the battery pack 22.

With the electric tool system 100 of the present disclosure, the feed circuit 112 charges the first storage battery 111 in advance, and each tool holder 12 feeds the electric power of the first storage battery 111 to the second storage battery 211 while holding a corresponding one of the battery-equipped electric tools 2 to which the second storage battery 211 is internal or the corresponding one of the battery-equipped electric tools 2 with the battery pack 22 attached, the second storage battery 211 being internal to the battery pack 22. Thus, battery replacement for the corresponding one of the battery-equipped electric tools 2 or attaching and detaching the battery pack 22 for battery charging is no longer required, thereby improving the working efficiency.

### (1-12) Differences in Battery-Equipped Electric Tool Between Embodiment and Variation

### (1-12-1) Battery-Equipped Electric Tool of Embodiment

Each battery-equipped electric tool 2 of the embodiment is the electric tool 21 with the battery pack 22 attached as shown in FIG. 1, the second storage battery 211 being internal to the battery pack 22.

In the embodiment, each tool holder 12 feeds electric power to the second storage battery 211 while holding a corresponding one of the battery-equipped electric tools 2 with the battery pack 22 attached, the second storage battery 211 being internal to the battery pack 22. Thus, attaching and detaching the battery pack 22 for battery charging is no longer necessary, thereby improving the working efficiency.

### (1-12-2) Battery-Equipped Electric Tool of Variation

As shown in FIG. 6, each battery-equipped electric tool 2 of the variation is the electric tool 21 to which the second storage battery 211 is internal.

In the variation, each tool holder 12 feeds electric power to the second storage battery 211 while holding a corresponding one of the battery-equipped electric tools 2 to which the second storage battery 211 is internal, and thus, battery replacement for the corresponding one of the battery-equipped electric tools 2 is no longer necessary, thereby improving the working efficiency.

### (1-13) Power Feeding Device

The power feeding device 1 according to the embodiment or variation of the present disclosure (hereinafter referred to as the "power feeding device 1 of the present disclosure") is a power feeding device for electric tools which feeds electric power to the electric tool 21 which is hand-holdable.

As shown in FIG. 1 or FIG. 6, the power feeding device 1 of the present disclosure includes the first storage battery 111, the feed circuit 112, and the tool holders 12.

The feed circuit 112 converts alternating-current power from the commercial power supply 300 into direct-current power and feeds the direct-current power to the first storage battery 111. Each tool holder 12 is capable of holding a corresponding one of the battery-equipped electric tools 2 and feeds the electric power of the first storage battery 111 to the second storage battery 211 while holding the corresponding one of the battery-equipped electric tools 2. Each battery-equipped electric tool 2 is the electric tool 21 to which the second storage battery 211 is internal, or the electric tool 21 with the battery pack 22 attached, the second storage battery 211 being internal to the battery pack 22.

As described above, in the power feeding device 1 of the present disclosure, the feed circuit 112 charges the first storage battery 111 in advance, and each tool holder 12 feeds the electric power of the first storage battery 111 to the second storage battery 211 while holding a corresponding one of the battery-equipped electric tools 2 to which the second storage battery 211 is internal or the corresponding one of the battery-equipped electric tools 2 with the battery pack 22 attached, the second storage battery 211 being internal to the battery pack 22. Thus, battery replacement for the corresponding one of the battery-equipped electric tools 2 or attaching and detaching the battery pack 22 for battery charging is no longer required, thereby improving the working efficiency.

### (2) Details

Next, the electric tool system 100 and other components according to the embodiment of the present disclosure will be described with reference to FIGS. 1 to 5. Note that the explanation of already described matters is omitted or simplified.

### (2-1) Details of Electric Tool System

As shown in FIG. 1, the electric tool system 100 of the present embodiment includes the power feeding device 1 and one or more (in this embodiment, a plurality of) battery-equipped electric tools 2. The power feeding device 1 includes the power storage 11 and one or more (in this embodiment, a plurality of) tool holders 12. The power storage 11 includes the first storage battery 111 and the feed circuit 112.

Each of the one or more tool holders 12 (hereinafter simply referred to as "the tool holder 12") includes the power feeder 121 and the processor 122. The processor 122 includes a tool detector 122a, a current detector 122b, and the first annunciator 12A.

Each of the one or more battery-equipped electric tools 2 (hereinafter simply referred to as "the battery-equipped electric tool 2") includes the electric tool 21 and the battery pack 22. The battery pack 22 includes the second storage battery 211 and a processor 212. processor 212 includes a voltage detector 212a and a second annunciator 12B.

### (2-1-1) Details of Power storage: First Storage Battery and Feed circuit, as well as Housing and Power Feeding Terminal

The power storage 11 accumulates electric power (direct-current power) for operation of the electric tool 21. The feed circuit 112 included in the power storage 11 is connected to the commercial power supply 300 via, for example, a power cable 301 as shown in FIG. 2. The feed circuit 112 converts alternating-current power from the commercial power supply 300 into direct-current power and feeds the direct-current power to the first storage battery 111 as described already. Note that the power storage 11 may include, for example, a display lamp (not shown) for issuing an announcement about the charge state of the first storage battery 111. In this case, the feed circuit 112 includes a processing circuit (not shown) that performs, for example, lighting control of the display lamp.

The first storage battery 111 is, for example, a lithium-ion battery. The lithium-ion battery is preferably, for example, an iron phosphate-based lithium-ion battery but may be a lithium-ion battery (e.g., a ternary lithium-ion battery) other than the iron phosphate-based lithium-ion battery. Alternatively, the first storage battery 111 is not limited to the lithium-ion battery but may be, for example, a nickel hydrogen battery or a lead storage battery and is basically not limited to a particular type as long as it has larger capacitance than the second storage battery. Thus, the first storage battery 111 may be the same type as the second storage battery 211 (e.g., an all-solid-state battery group including a plurality of all-solid-state batteries connected in parallel to each other).

Note that when the power storage 11 is the fixed type, there are few restrictions on the weight and/or the size as compared with the transportable type, and therefore, the first storage battery 111 may employ a capacitor (e.g., an electric double layer, or large-capacitance electrolytic, capacitor) having a lower energy density than the battery as described above.

The first storage battery 111 and the feed circuit 112 are housed in, for example, the first housing 110 as shown in FIG. 3A. The first housing 110 is provided with one or more (in this embodiment, a plurality of) power feeding terminals 110a.

The power feeding terminals 110a are terminals for feeding the electric power of the first storage battery 111 (for feeding electric power) via the power feeders 121 of the respective tool holders 12 to the second storage batteries 211 of the respective battery-equipped electric tools 2. Each of the one or more power feeding terminals 110a provided for the first housing 110 of the power storage 11 (hereinafter simply referred to as "a power feeding terminal 110a") is electrically connected to the secondary side of the first storage battery 111 in the first housing 110.

### (2-1-2) Details of Tool Holder: Power Feeder and Processor

As already described above, each tool holder 12 is capable of holding a corresponding one of the battery-equipped electric tools 2 and feeds the electric power of the first storage battery 111 to the second storage battery 211 while holding the corresponding one of the battery-equipped electric tools 2.

Each tool holder 12 includes the second housing 120. The second housing 120 has a shape capable of holding the battery-equipped electric tool 2. The second housing 120 is provided with: the input terminal 120a which is to be electrically connected to the power feeding terminal 110a of the power storage 11 via the connection cable 200; and the output terminal 120b which is to be physically coupled to, and electrically connected to, the power receiving terminal 201 (described later) of the battery-equipped electric tool 2. The input terminal 120a and the output terminal 120b are electrically connected to each other via the power feeder 121 housed in the second housing 120.

As shown in FIG. 2, the second housing 120 of the present embodiment includes a tool body holder 120A and a battery pack holder 120B. The tool body holder 120A has one end side having an insertion hole 120c and the other end side having the input terminal 120a. Into the insertion hole 120c is to be inserted the tip tool 23 attached to the tool body 21A (see FIG. 3B) of the electric tool 21. The battery pack holder 120B is attached at an end, on a side where the input terminal 120a is provided, of the tool body holder 120A. The output terminal 120b is disposed at a location opposite the input terminal 120a.

The power feeder 121 included in each tool holder 12 performs the power feeding as described above. That is, the power feeder 121 feeds electric power accumulated in the first storage battery 111 to the second storage battery 211. The power feeder 121 includes, for example: a connection line (e.g., see FIG. 2) which electrically connects the input terminal 120a and the output terminal 120b to each other; and a switch (not shown) which opens and closes the connection line.

The power feeder 121 performs the power feeding in a state where the input terminal 120a is electrically connected to the power feeding terminal 110a of the power storage 11 via the connection cable 200 and the output terminal 120b is physically coupled to, and electrically connected to, the power receiving terminal 201 of the battery-equipped electric tool 2 (see FIG. 3B). Specifically, the power feeder 121 closes the connection line (electrically connects the input terminal 120a and the output terminal 120b to each other) via the switch, thereby starting the power feeding.

Note that during a series of sessions of work, the input terminal 120a of each tool holder 12 is connected to the power feeding terminal 110a of the power storage 11 via the connection cable 200 at all times. In contrast, the output terminal 120b of each tool holder 12 is physically coupled to, and electrically connected to, the power receiving terminal 201 of a corresponding one of the battery-equipped electric tools 2 between a session of work and a next session of work of the series of the sessions of work (i.e., between the sessions of work).

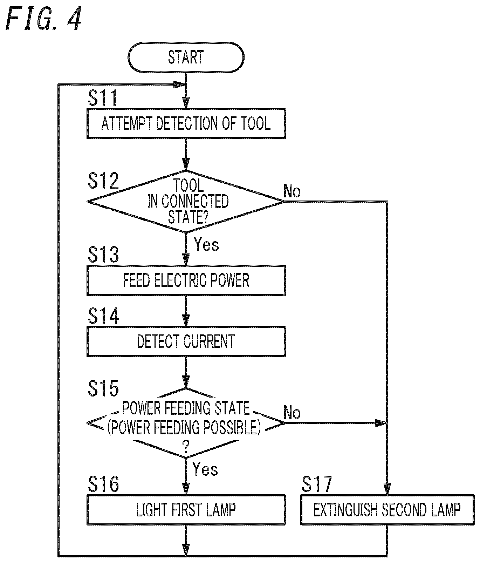

The processor 122 included in each tool holder 12 performs a various types of processes. The various types of processes are, for example, the process by the tool detector 122a, the process by the current detector 122b, and the process by the first annunciator 12A. Moreover, the processor 122 also performs processes, such as various types of determinations, described with reference to the flowchart of FIG. 4.

The tool detector 122a included in the processor 122 detects the battery-equipped electric tool 2. That is, the tool detector 122a detects a physical coupling between the input terminal 120a of the tool holder 12 and the power receiving terminal 201 of the battery-equipped electric tool 2 (e.g., determines whether or not the input terminal 120a and the power receiving terminal 201 are physically coupled to each other) by using a contact sensor (not shown) included in any one of the input terminal 120a or the power receiving terminal 201.

The current detector 122b detects a current from the first storage battery 111 to the second storage battery 211. That is, the current detector 122b detects an electrical connection between the input terminal 120a of the tool holder 12 and the power receiving terminal 201 of the battery-equipped electric tool 2 (i.e., determines whether or not the input terminal 120a and the power receiving terminal 201 are electrically connected to each other).

The first annunciator 12Aissues an announcement based on a detection results by the tool detector 122a and the current detector 122b. For example, when the input terminal 120a of the tool holder 12 and the power receiving terminal 201 of the battery-equipped electric tool 2 are physically coupled, and electrically connected, to each other, the first annunciator 12A announces that the power feeding is possible. The announcement by the first annunciator 12A is issued through the operation (e.g., lighting and extinguishing) of the first lamp L1.

In the present embodiment, the first lamp L1 is disposed on a surface which the tool body holder 120A has and to which the battery pack holder 120B has been attached (a surface corresponding to the battery-equipped electric tool 2).

### (2-1-3) Details of Battery-Equipped Electric Tool: Electric Tool and Battery Pack

Each battery-equipped electric tool 2 in the present embodiment is the electric tool 21 with the battery pack 22 attached as shown in, for example, FIG. 1.

### (2-1-3a) Electric Tool

The electric tool 21 is, for example, a rotating tool as shown in FIG. 3B. The electric tool 21 includes the tool body 21A and a grip 21B. To the tool body 21A, for example, the tip tool 23, such as a screw driver, is attached, and the grip 21B is held by a hand of a worker. The grip 21B has one end attached to the tool body 21A and the other end to which the battery pack 22 is attached. The tip tool 23 attached to the tool body 21A is driven to rotate by the electric power of the second storage battery 211 in the battery pack 22 attached to the grip 21B.

### (2-1-3b) Battery Pack: Second Storage Battery and Processor

The battery pack 22 is a member to which the second storage battery 211 is internal and which is removably attachable to the electric tool 21. The battery pack 22 is provided with the power receiving terminal 201.

The power receiving terminal 201 is a terminal fed with the electric power from the first storage battery 111 of the power storage 11 via the power feeder 121 of the tool holder 12 and is electrically connected to the primary side of the second storage battery 211. The power receiving terminal 201 has a shape capable of physically coupling to the output terminal 120b of the tool holder 12.

Moreover, the battery pack 22 is provided with a second lamp L2. The second lamp L2 of the present embodiment is disposed on a rear end side of the battery pack 22 (on an opposite side from the side where the tip tool 23 is attached) but may be disposed at any location on the battery pack 22 as long as the worker easily visually recognizes the second lamp L2. Note that the second lamp L2 is not limited to being provided for the battery pack 22 but may be provided for the electric tool 21 (e.g., the tool body 21A).

The second storage battery 211 in the present embodiment is an all-solid-state battery. However, the second storage battery 211 does not have to be the all-solid-state battery as long as the second storage battery 211 is chargeable faster than the first storage battery 111. Moreover, the second storage battery 211 preferably has longer service life than the first storage battery 111. Note that for each battery-equipped electric tool 2 of the present embodiment, the entire battery pack 22 is replaceable, and thus, the second storage battery 211 does not necessarily have to have long service life.

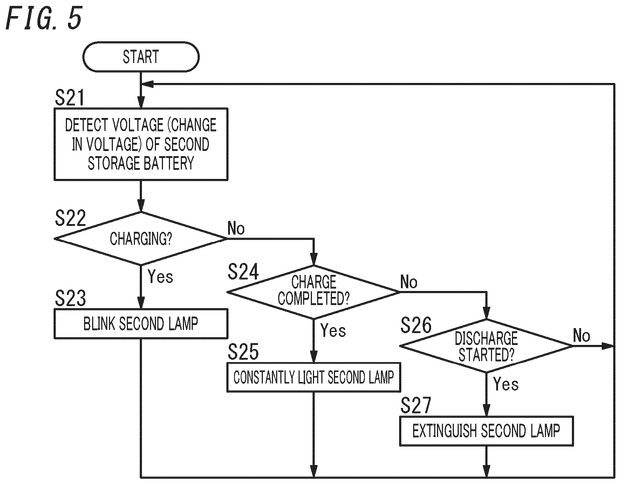

The processor 212 included in the battery pack 22 (in the variation, the battery-equipped electric tool 2) performs various types of processes. The various types of processes are, for example, the process by the voltage detector 212a and the process by the second annunciator 12B. Moreover, the processor 212 also performs processes, such as various types of determinations described with reference to the flowchart of the FIG. 5.

The voltage detector 212a included in the processor 212 detects the voltage of the second storage battery 211. The voltage detector 212a detects the voltage of the second storage battery 211 via, for example, a voltage sensor (not shown) disposed on the secondary side of the second storage battery 211.

The second annunciator 12B determines the state of the second storage battery 211 on the basis of a detection result by the voltage detector 212a and issues an announcement according to a determination result. Examples of the determination on the state of the second storage battery 211 include a determination as to whether or not the second storage battery 211 is being charged, a determination as to whether or not the charging is completed, and a determination whether or not the second storage battery 211 is started to be discharged (i.e., the electric tool 21 is started to operate with the electric power of the second storage battery 211).

Specifically, for example, when the detection result by the voltage detector 212a is less than or equal to a threshold and the voltage is increasing, the second annunciator 12B determines that the second storage battery 211 is being charged. Moreover, for example, when the detection result exceeds the threshold, the second annunciator 12B determines that charge is completed, and when the detection result falls under the threshold, the second annunciator 12B determines that discharge is started.

In the present embodiment, the announcement according to the determination result is issued through the second lamp. The announcement through the second lamp may be, for example, an announcement expressed by different pattern of lighting the second lamp. Examples of the announcement expressed by the different lighting pattern include blinking in response to the determination result representing being charged, continuous lighting in response to the determination result representing charge completion, and extinguishing in response to the determination result representing a discharge start. Alternatively, the announcement issued through the second lamp may be expressed by, for example, a difference in color of light emitted from the second lamp (e.g., yellow light emission corresponding to being charged, blue light emission corresponding to the charge completion, and no light emission or white light emission corresponding to the discharge start).

### (2-2) Operation of Processor

Next, a first announcement process by the processor 122 of each tool holder 12 and a second announcement process by the processor 212 of each battery pack 22 will be described with reference to flowcharts of FIGS. 4 and 5. Note that the explanation of already described matters is omitted or simplified.

### (2-2-1) First Announcement Process

The processor 122 of each tool holder 12 executes a process (the first announcement process) according to the flowchart of FIG. 4. Note that the process of FIG. 4 starts in response to activation of the electric tool system 100 (the tool holder 12) and ends in response to a stop of the operation of the electric tool system 100.

First of all, the tool detector 122a included in the processor 122 attempts detection of the battery-equipped electric tool 2 (step S11).

Then, the processor 122 determines whether or not the battery-equipped electric tool 2 has been detected (i.e., whether or not the output terminal 120b of the tool holder 12 is physically coupled to the power receiving terminal 201 of the battery-equipped electric tool 2) (step S12). If it is determined that the battery-equipped electric tool 2 has not been detected (the output terminal 120b is not physically coupled to the power receiving terminal 201), the process proceeds to step S17.

If it is determined in step S11 that the battery-equipped electric tool 2 has been detected (the output terminal 120b has been physically coupled to, or is in physical coupling with, the power receiving terminal 201), the power feeder 121 feeds the electric power of the first storage battery 111 to the second storage battery 211 (closes the connection line via the switch to electrically connect the input terminal 120a and the output terminal 120b to each other) (step S13).

Then, the current detector 122b detects a current flowing through the connection line (step S14).

Then, the processor 122 determines, based on a detection result in step S14, whether or not the first storage battery 111 is in a power feeding state where the current is flowing through the connection line (or the power feeding from the first storage battery 111 is possible) (step S15). If it is determined that the first storage battery 111 is not in the power feeding state (the power feeding is impossible), the process proceeds to step S17.

If it is determined in step S15 that the first storage battery 111 is in the power feeding state (the power feeding is possible), the first annunciator 12A lights (or maintains the lighting state of) the first lamp L1 (step S16). This allows a worker to visually recognize that the power feeding from the first storage battery 111 is possible. Then, the process returns to step S11.

If it is determined in step S12 that the battery-equipped electric tool 2 has not been detected, or if it is determined in step S15 that the first storage battery 111 is not in the power feeding state (the power feeding is impossible), the first annunciator 12A extinguishes the first lamp L1 (or keeps the first lamp L1 extinguished) (step S17). Thereafter, the process returns to step S11.

### (2-2-2) Second Announcement Process

The processor 212 of each battery pack 22 executes a process (the second announcement process) according to the flowchart of FIG. 5. Note that the process of FIG. 5 starts and ends respectively in response to activation, and a stop of the operation, of the electric tool system 100 (the battery-equipped electric tool 2).

First of all, the voltage detector 212a included in the processor 212 detects the voltage of the second storage battery 211 (step S21).

Then, the processor 212 determines, based on a detection result in step S21, whether or not the second storage battery 211 is being charged (step S22). If it is determined that the second storage battery 211 is not being charged, the process proceeds to step S24.

If it is determined in step S22 that the second storage battery 211 is being charged, the second annunciator 12B blinks the second lamp L2 (step S23). This allows the worker to visually recognize that the second storage battery 211 is being charged. Thereafter, the process returns to step S21.

If it is determined in step S22 that the second storage battery 211 is not being charged, the processor 212 determines, based on a detection result in step S21, whether or not charging the second storage battery 211 is completed (or has already been completed) (step S24). If it is determined that the charging the second storage battery 211 has not completed yet, the process proceeds to step S26.

If it is determined in step S24 that the charging the second storage battery 211 is completed, the second annunciator 12B continuously lights the second lamp L2 (step S25). This allows the worker to visually recognize that the charging the second storage battery 211 is completed. Thereafter, the process returns to step S21.

If it is determined in step S24 that the charging the second storage battery 211 has not been completed yet, the processor 212 determines whether or not the second storage battery 211 has been started to discharge (or is being discharged) (step S26). If it is determined that the second storage battery 211 has not been started to discharge (is not being discharged), the process returns to step S21.

If it is determined in step S26 that the second storage battery 211 has been started to discharge (is being discharged), the second annunciator 12B extinguishes the second lamp L2 (keeps the second lamp L2 extinguished) (step S27). This allows the worker to visually recognize that the second storage battery 211 is being discharged. Thereafter, the process returns to step S21.

### (2-3) Operation Example

Next, an operation example of the electric tool system 100 will be described with reference to FIGS. 3A and 3B. Note that matters to be described below are mere examples and may be modified variously.

In the present example, a worker carries out a series of sessions of work (e.g., screw tightening work) by using the battery-equipped electric tool 2 (e.g., electrically driven screw driver).

Until the series of sessions of work is started (e.g., after the end of a series of sessions of work in the previous day), the worker connects the power storage 11 to the commercial power supply 300 via the power cable 301 as shown in FIG. 3A to charge the first storage battery 111.

To start the series of sessions of work, the worker detaches the power storage 11 from the commercial power supply 300 and installs the power storage 11 in a work place. As shown in FIG. 3B, the worker then connects the input terminal 120a of the tool holder 12 to the power feeding terminal 110a of the power storage 11 via the connection cable 200 and sets the battery-equipped electric tool 2 on the tool holder 12. Thus, the tip tool 23 attached to the tool body 21A is inserted into the insertion hole 120c of the tool body holder 120Aincluded in the second housing 120. Moreover, the power receiving terminal 201 provided for the battery pack 22 of the battery-equipped electric tool 2 is physically coupled to the output terminal 120b of the tool holder 12, and thereby, the power feeder 121 of the tool holder 12 and the second storage battery 211 in the battery pack 22 are electrically connected to each other. In response to this, the first lamp L1 is lit.

Thereafter, the electric power of the first storage battery 111 is started to be fed to the second storage battery 211, and the second lamp L1 then enters a blinking state. When charging the second storage battery 211 is completed, the second lamp L1 enters a continuous lighting state. In response to this, the worker detaches the battery-equipped electric tool 2 from the tool holder 12 and starts carrying out work, such as the screw tightening. Thus, the second storage battery 211 starts discharging, and the second lamp L1 then enters an extinguished state.

Once a session of work ends, the worker sets the battery-equipped electric tool 2 on the tool holder 12, and thereby, the second storage battery 211 is recharged.

Hereafter, the worker sets the battery-equipped electric tool 2 on the tool holder 12 each time a session of work ends (between sessions of work). Thus, the second storage battery 211 thus discharged is charged, and thus, without replacing the battery pack 22, the series of sessions of work can be continuously carried out.

### (3) Variation

Next, the variation of the electric tool system 100 and other components described above will be explained with reference to FIGS. 6 to 10. Note that the following description explains only differences of the electric tool system 100 and other components of the present variation from the electric tool system 100 and other components of the embodiment described above, and the description of matters common to the embodiment and the variation is omitted or simplified.

### (3-1) Configuration of Variation

As shown in FIG. 6, the electric tool system 100 of the variation includes the power feeding device 1 and one or more (in this embodiment, a plurality of) battery-equipped electric tools 2. The power feeding device 1 includes the power storage 11 and one or more (in this embodiment, a plurality of) tool holders 12. The power storage 11 includes the first storage battery 111 and the feed circuit 112.

Each of the one or more tool holders 12 (hereinafter simply referred to as "the tool holder 12") includes the power feeder 121 and the processor 122. The processor 122 includes a tool detector 122a, a current detector 122b, and the annunciator 12C.

Each of the one or more battery-equipped electric tools 2 (hereinafter simply referred to as "a battery-equipped electric tool 2") includes the second storage battery 211 and a processor 212. The processor 212 includes a voltage detector 212a and a notifier 212b.

That is, the electric tool system 100 of the present variation shown in FIG. 6 is different from the electric tool system 100 of the above-described embodiment shown in FIG. 1 in that the second storage battery 211 and the processor 212 are internal to each battery-equipped electric tool 2, and thus, attaching the battery pack 22 is not necessary (see, for example, FIG. 7A).

Moreover, since no battery pack 22 is attached to each battery-equipped electric tool 2 of the present variation, the second housing 120 included in each tool holder 12 of the present variation is different from the second housing 120 included in each tool holder 12 of the above-described embodiment in that the second housing 120 of the present variation includes no battery pack holder 120B but includes only a tool body holder 120A.

In addition, the electric tool system 100 of the present variation is different from the electric tool system 100 of the above-described embodiment (see FIG. 1) in that each tool holder 12 (processor 122) includes the annunciator 12C as an alternative to the first annunciator 12A and each battery-equipped electric tool 2 includes the notifier 212b (see FIG. 6) as an alternative to the second annunciator 12B.

The notifier 212b determines, based on a detection result by the voltage detector 212a, the state of the second storage battery 211 and gives notification according to a determination result to the tool holder 12 (annunciator 12C).

In the present variation, the notification is given, for example, over wired communication via an electrical path (part of the connection line) between the power feeder 121 included in the tool holder 12 and the second storage battery 211 included in the battery-equipped electric tool 2. Note that when each of the tool holder 12 and the battery-equipped electric tool 2 includes a wireless communication module, the notification may be given over wireless communication.

The annunciator 12C issues, in a similar manner to the first annunciator 12A, an announcement according to detection results by the tool detector 122a and the current detector 122b through the first lamp L1, and in addition, issues, through a second lamp L2, an announcement according to the notification from the notifier 212b.

The first lamp L1 of the present variation (see, for example, FIG. 7A) is provided for the tool body holder 120A included in the second housing 120 of the tool holder 12 in a similar manner to the first lamp L1 of the above-described embodiment (see, for example, FIG. 2). In contrast, the second lamp L2 of the present variation (see, for example, FIG. 2) is different from the second lamp L2 of the present embodiment in that the second lamp L2 of the present variation is disposed on the tool body holder 120A in alignment with the first lamp L1 (see, for example, FIG. 7A).

Unlike the input terminal 120a and the output terminal 120b as well as the power feeder 121 of the above-described embodiment (see, for example, FIG. 2), the input terminal 120a and the output terminal 120b as well as the power feeder 121 of the present variation (see, for example, FIG. 7A) are provided for the tool body holder 120A included in the second housing 120 of the tool holder 12.

Unlike the power receiving terminal 201 of the above-described embodiment (see FIG. 3B), the power receiving terminal 201 of the present variation (see, for example, FIG. 7B) is provided for the tool body 21A.

### (3-2) Operation of Processor in Variation

### (3-2-1) Announcement Process

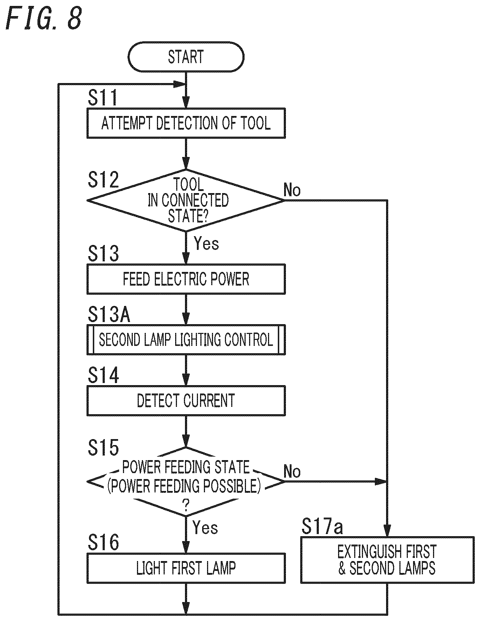

The processor 122 included in each tool holder 12 of the present variation executes a process (an announcement process) according to the flowchart of FIG. 8. The flowchart of the FIG. 8 corresponds to the flowchart of FIG. 4 to which step S13A is added between step S13 and step S14 and in which step S17 is replaced with step S17a.

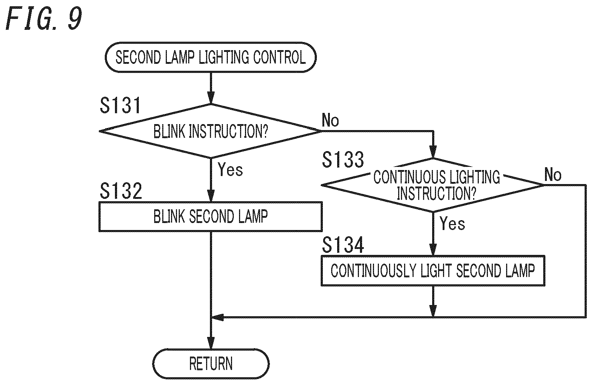

In step S13A, lighting control of the second lamp L2 (a second lamp lighting control process) is performed based on a notification from the battery-equipped electric tool 2 (the notifier 212b). Note that the second lamp lighting control process will be described with reference to FIG. 9. In step S17a, the second lamp L2 is also extinguished in addition to the first lamp L1.

The second lamp lighting control process in step S13Ais executed in accordance with the flowchart of FIG. 9.

First of all, the processor 122 determines whether or not a notification as to a blink instruction has been given from the battery-equipped electric tool 2 (the notifier 212b) (step S131). If it is determined that no notification as to the blink instruction has been given, the process proceeds to step S133.

If it is determined in step S131 that the notification as to the blink instruction has been given, the annunciator 12C blinks the second lamp L2 (step S132). Thereafter, the process returns to a high-level flowchart (see FIG. 8).

If it is determined in step S131 that no notification as to the blink instruction has been given, the processor 122 determines whether or not a notification as to continuous lighting instruction has been given from the battery-equipped electric tool 2 (the notifier 212b) (step S133). If it is determined that no notification as to the continuous lighting instruction has been given, the process returns to the high-level flowchart (see FIG. 8).

If it is determined that the notification as to the continuous lighting instruction has been given, the annunciator 12C continuously lights the second lamp L2 (step S134). Thereafter, the process returns to the high-level flowchart (see FIG. 8).

### (3-2-2) Notification Process

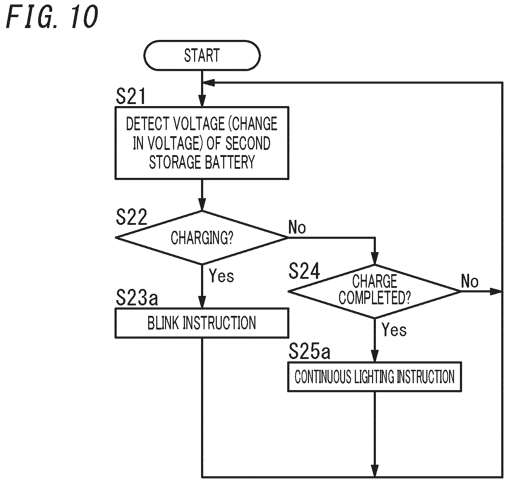

The processor 212 of each battery-equipped electric tool 2 in the present variation executes a process (a notification process) according to the flowchart of FIG. 10. The flowchart of FIG. 10 corresponds to the flowchart of FIG. 5 in which step S23 and the step S25 are respectively replaced with step S23a and step S25a and in which step S26 and step S27 are omitted.

Note that since step S26 and step S27 are omitted, a process performed when it is determined in step S24 that charging the second storage battery 211 has not been completed is the process of returning to step S131.

In step S23a, the tool holder 12 (annunciator 12C) is notified of the blink instruction. Thereafter, the process returns to step S131.

In step S25a, the tool holder 12 (annunciator 12C) is notified of the continuous lighting instruction. Thereafter, the process returns to step S131.

### (4) Other Variations

### (4-1) Integration of Power storage and Tool Holder

In the above-described embodiment and variation, the power storage 11 and each tool holder 12 included in the power feeding device 1 are configured as separate components as shown in FIGS. 2 and 7A and the power storage 11 is electrically connected to the tool holders 12 via the connection cables 200. However, the power storage 11 and the tool holders 12 may be integral with, and electrically connected to, each other without using the connection cables 200.

That is, a group of elements such as the first storage battery 111 included in the power storage 11 and a group of elements such as the power feeder 121 included in each tool holder 12 may be housed in a single housing (not shown). Alternatively, the power storage 11 and each tool holder 12 may be physically coupled to (integrated with), and may be electrically connected to, each other. In this case, a single component in which the power storage 11 and the tool holder 12 are integral is preferably portable but may be stationary.

### (4-2) Announcement That Power Feeding is Impossible, Etc.

The announcement by the first annunciator 12A of each of the above-described embodiment and variation (the first lamp lighting process in step S16 of each of FIGS. 4 and 8) is not limited to the announcement that the power feeding from the first storage battery 111 is possible (the power feeding is possible) but may be the announcement that the power feeding from the first storage battery 111 is impossible (the power feeding is impossible). The notification given by the notifier 212b of the variation is not limited to the notification that the power feeding is possible but may be the notification that the power feeding is impossible.

### (5) Summary

A power feeding system (10) of a first aspect of the present disclosure feeds electric power to an electric tool (21) which is hand-holdable. The power feeding system (10) includes a first storage battery (111), a feed circuit (112), a second storage battery (211), and a tool holder (12). The feed circuit (112) is configured to convert alternating-current power from a commercial power supply (300) into direct-current power and feed the direct-current power to the first storage battery (111). The second storage battery (211) is internal to the electric tool (21) or is internal to a battery pack (22) attachable to the electric tool (21). The tool holder (12) is capable of holding a battery-equipped electric tool (2) and is configured to, while holding the battery-equipped electric tool (2), feed electric power of the first storage battery (111) to the second storage battery (211). The battery-equipped electric tool (2) is the electric tool (21) to which the second storage battery (211) is internal or the electric tool (21) with the battery pack (22) attached, the second storage battery (211) being internal to the battery pack (22).

With this aspect, the feed circuit (112) charges the first storage battery (111) in advance, and the tool holder (12) feeds the electric power of the first storage battery (111) to the second storage battery (211) while holding the battery-equipped electric tool (2) to which the second storage battery (211) is internal or the battery-equipped electric tool (2) with the battery pack (22) attached, the second storage battery (211) being internal to the battery pack (22). Thus, battery replacement for the battery-equipped electric tool (2) or attaching and detaching the battery pack (22) for battery charging is no longer necessary, thereby improving the working efficiency.

A power feeding system (10) of a second aspect referring to the first aspect includes a plurality of the tool holders (12).

This aspect enables a plurality of battery-equipped electric tools (2) to be charged simultaneously, thereby improving the working efficiency.

A power feeding system (10) of a third aspect referring to the first or second aspect further includes a power storage (11). The power storage (11) includes the first storage battery (111), the feed circuit (112), and a first housing (110). The first housing (110) houses the first storage battery (111) and the feed circuit (112). The tool holder (12) includes a second housing (120). The second housing (120) is capable of holding the battery-equipped electric tool (2). At least one of the first housing (110) or a plurality of the second housings (120) is portable.

In this aspect, the power storage (11) and the tool holder(s) (12) are configured as separate components, and at least either the power storage (11) or the tool holder(s) (12) is portable, thereby improving the working efficiency in various types of environments.

A power feeding system (10) of a fourth aspect referring to the third aspect further includes a power feeding terminal (110a), an input terminal (120a), an output terminal (120b), and a power receiving terminal (201). The power feeding terminal (110a) is provided for the first housing (110) and is electrically connected to the first storage battery (111). The input terminal (120a) is provided for the second housing (120) and is electrically connectable to the power feeding terminal (110a) via a connection cable (200). The output terminal (120b) is provided for the second housing (120) and is electrically connected to the input terminal (120a). The power receiving terminal (201) is provided for the electric tool (21) or the battery pack (22) and is electrically connected to the second storage battery (211). The output terminal (120b) and the power receiving terminal (201) are electrically connectable to each other by a physical coupling.

In this aspect, the power storage (11) is connected to the tool holder (12) via the connection cable (200), thereby increasing the degree of freedom in the location of the tool holder (12) with respect to the power storage (11). Moreover, the tool holder (12) is connected to the battery-equipped electric tool (2) by the physical coupling, and in a period during which the physical coupling is released, the battery-equipped electric tool (2) is operated by electric power of the second storage battery (211), thereby allowing the battery-equipped electric tool (2) to be moved to an arbitrary location. As a result, the working efficiency can be further improved.

In a power feeding system (10) of a fifth aspect referring to the fourth aspect, the tool holder (12) includes a power feeder (121). The power feeder (121) is configured to perform power feeding while the output terminal (120b) and the power receiving terminal (201) are in physical coupling with each other. the power feeding is feeding electric power of the first storage battery (111) to the second storage battery (211). The battery-equipped electric tool (2) is configured to operate based on electric power of the second storage battery (211) while the output terminal (120b) and the power receiving terminal (201) are physically separate from each other.

With this aspect, simply setting the battery-equipped electric tool (2) on the tool holder (12) between sessions of work allows the second storage battery (211) to be charged with the electric power from the first storage battery (111), and thus, a series of the sessions of work can be carried out without battery replacement or attaching and detaching the battery pack (22), thereby improving the working efficiency.

A power feeding system (10) of a sixth aspect referring to the fifth aspect further includes an annunciator (12A, 12B, 12C). The annunciator (12A, 12B, 12C) is configured to issue an announcement about at least one of whether or not the power feeding is possible or a charge state of the second storage battery (211) based on the power feeding.

With this aspect, presenting to a worker at least one of whether or not the power feeding from the first storage battery (111) to the second storage battery (211) is possible or the charge state of the second storage battery (211) based on the power feeding facilitates recognition of appropriate timings to start and end charging the battery-equipped electric tool (2), thereby improving the working efficiency.

In a power feeding system (10) of a seventh aspect referring to any one of the first to sixth aspects, the first storage battery (111) has larger capacitance than the second storage battery (211).

With this aspect, the first storage battery (111) has the large capacitance, and therefore, charging the first storage battery (111) once makes possible at least one of simultaneous charging of a plurality of second storage batteries (211) from the first storage battery (111) or repetitive charging of one second storage battery (211) from the first storage battery (111), thereby further improving the working efficiency.

In a power feeding system (10) of an eighth aspect referring to any one of the first to seventh aspects, the second storage battery (211) has a higher charging speed than the first storage battery (111).

With this aspect, the second storage battery (211) is fast-chargeable, and therefore, it is possible to proceed with a series of sessions of work while the second storage battery (211) is charged between the sessions of work, thereby further improving the working efficiency.

In a power feeding system (10) of a ninth aspect referring to the eighth aspect, the second storage battery (211) is an all-solid-state battery.

With this aspect, the second storage battery (211) is the high-speed chargeable all-solid-state battery, thereby further improving the working efficiency. Moreover, the long service life of the all-solid-state battery reduces the change frequency of the second storage battery, which enables an electric tool to which the second storage battery is internal (from which the battery pack 22 is omitted) to be provided. Moreover, the high energy density of the all-solid-state battery reduces at least one of the volume or weight of the second storage battery, thereby further improving the working efficiency.

An electric tool system (100) according to a tenth aspect includes: the power feeding system (10) of any one of the first to ninth aspects; and a battery-equipped electric tool (2). The battery-equipped electric tool (2) is the electric tool (21) to which the second storage battery (211) is internal or the electric tool (21) with the battery pack (22) attached, the second storage battery (211) being internal to the battery pack (22).

With this aspect, the feed circuit (112) charges the first storage battery (111) in advance, and the tool holder (12) feeds the electric power of the first storage battery (111) to the second storage battery (211) while holding the battery-equipped electric tool (2) to which the second storage battery (211) is internal or the battery-equipped electric tool (2) with the battery pack (22) attached, the second storage battery (211) being internal to the battery pack (22). Thus, battery replacement for the battery-equipped electric tool (2) or attaching and detaching the battery pack (22) for battery charging is no longer necessary, thereby improving the working efficiency.

In an electric tool system (100) of an eleventh aspect referring to the tenth aspect, the battery-equipped electric tool (2) is the electric tool (21) to which the second storage battery (211) is internal.

With this aspect, the tool holder (12) feeds electric power to the second storage battery (211) while holding the battery-equipped electric tool (2) to which the second storage battery (211) is internal. Thus, the battery replacement for the battery-equipped electric tool (2) is no longer necessary, thereby improving the working efficiency.

In an electric tool system (100) of a twelfth aspect referring to the tenth aspect, the battery-equipped electric tool (2) is the electric tool (21) with the battery pack (22) attached, the second storage battery (211) being internal to the battery pack (22).

In this aspect, the tool holder (12) feeds electric power to the second storage battery (211) while holding the battery-equipped electric tool (2) with the battery pack (22) attached, the second storage battery (211) being internal to the battery pack (22).Thus, attaching and detaching the battery pack (22) for battery charging is no longer necessary, thereby improving the working efficiency.

A power feeding device (1) of a thirteenth aspect feeds electric power to an electric tool (21) which is hand-holdable. The power feeding device (1) includes a first storage battery (111), a feed circuit (112), and a tool holder (12). The feed circuit (112) is configured to convert alternating-current power from a commercial power supply (300) into direct-current power and feed the direct-current power to the first storage battery (111). The tool holder (12) is capable of holding a battery-equipped electric tool (2), and is configured to, while holding the battery-equipped electric tool (2), feed electric power of the first storage battery (111) to the second storage battery (211). The battery-equipped electric tool (2) is the electric tool (21) to which the second storage battery (211) is internal or the electric tool (21) with a battery pack (22) attached, the second storage battery (211) being internal to the battery pack (22).

With this aspect, the feed circuit (112) charges the first storage battery (111) in advance, and the tool holder (12) feeds the electric power of the first storage battery (111) to the second storage battery (211) while holding the battery-equipped electric tool (2) to which the second storage battery (211) is internal or battery-equipped electric tool (2) with the battery pack (22) attached, the second storage battery (211) being internal to the battery pack (22). Thus, battery replacement for the battery-equipped electric tool (2) or attaching and detaching the battery pack (22) for battery charging is no longer necessary, thereby improving the working efficiency.

### Reference Signs List

- 100: Electric Tool System
- 1: Power Feeding Device
- 10: Power Feeding System
- 11: Power Storage
- 111: First Storage Battery
- 112: Feed Circuit
- 12: Tool Holder
- 121: Power Feeder
- 12A: First Annunciator (Annunciator)
- 12B: Second Annunciator (Annunciator)
- 12C: Annunciator
- 2: Battery-Equipped Electric Tool
- 21: Electric Tool
- 22: Battery Pack
- 211: Second Storage Battery
- 110: First Housing
- 110a: Power Feeding Terminal
- 120: Second Housing
- 120a: Input Terminal
- 120b: Output Terminal
- 201: Power Receiving Terminal
- 200: Connection Cable
- 300: Commercial Power Supply

## Claims

1. A power feeding system for feeding power to an electric tool which is hand-holdable, the power feeding system comprising:
a first storage battery;
a feed circuit configured to convert alternating-current power from a commercial power supply into direct-current power and feed the direct-current power to the first storage battery;
a second storage battery being internal to the electric tool or being internal to a battery pack attachable to the electric tool; and
a tool holder capable of holding a battery-equipped electric tool and configured to, while holding the battery-equipped electric tool, feed electric power of the first storage battery to the second storage battery,
the battery-equipped electric tool being
the electric tool to which the second storage battery is internal or
the electric tool with the battery pack attached, the second storage battery being internal to the battery pack.

2. The power feeding system of claim 1, wherein
the power feeding system includes a plurality of the tool holders.

3. The power feeding system of claim 1 or 2, further comprising a power storage including the first storage battery, the feed circuit, and a first housing housing the first storage battery and the feed circuit, wherein
the tool holder includes a second housing capable of holding the battery-equipped electric tool, and
at least one of the first housing or a plurality of the second housings is portable.

4. The power feeding system of claim 3, further comprising:
a power feeding terminal provided for the first housing and electrically connected to the first storage battery;
an input terminal provided for the second housing and electrically connectable to the power feeding terminal via a connection cable;
an output terminal provided for the second housing and electrically connected to the input terminal; and
a power receiving terminal provided for the electric tool or the battery pack and electrically connected to the second storage battery, wherein
the output terminal and the power receiving terminal are electrically connectable to each other by a physical coupling.

5. The power feeding system of claim 4, wherein
the tool holder includes a power feeder configured to perform power feeding while the output terminal and the power receiving terminal are in physical coupling with each other, the power feeding being feeding electric power of the first storage battery to the second storage battery, and
the battery-equipped electric tool is configured to operate based on electric power of the second storage battery while the output terminal and the power receiving terminal are physically separate from each other.

6. The power feeding system of claim 5, further comprising an annunciator configured to issue an announcement about at least one of whether or not the power feeding is possible or a charge state of the second storage battery based on the power feeding.

7. The power feeding system any one of claims 1 to 6, wherein
the first storage battery has larger capacitance than the second storage battery.

8. The power feeding system of any one of claims 1 to 7, wherein
the second storage battery has a higher charging speed than the first storage battery.

9. The power feeding system of claim 8, wherein
the second storage battery is an all-solid-state battery.

10. An electric tool system comprising:
the power feeding system of any one of claims 1 to 9; and
a battery-equipped electric tool which is the electric tool to which the second storage battery is internal or the electric tool with the battery pack attached, the second storage battery being internal to the battery pack.

11. The electric tool system of claim 10, wherein
the battery-equipped electric tool is the electric tool to which the second storage battery is internal.

12. The electric tool system of claim 10, wherein
the battery-equipped electric tool is the electric tool with the battery pack attached, the second storage battery being internal to the battery pack.

13. A power feeding device for feeding power to an electric tool which is hand-holdable, the power feeding device comprising:
a first storage battery;
a feed circuit configured to convert alternating-current power from a commercial power supply into direct-current power and feed the direct-current power to the first storage battery; and
a tool holder capable of holding a battery-equipped electric tool and configured to, while holding the battery-equipped electric tool, feed electric power of the first storage battery to the second storage battery,
the battery-equipped electric tool being
the electric tool to which the second storage battery is internal or
the electric tool with a battery pack attached, the second storage battery being internal to the battery pack.
